(19)

Europäisches
Patentamt
European
Patent Office
Office européen
des brevets

(11) **EP 2 747 030 A2**

(12) **EUROPEAN PATENT APPLICATION**

(43) Date of publication:
**25.06.2014 Bulletin 2014/26**

(51) Int Cl.:
***G06T 7/00*** *(2006.01)*

(21) Application number: **13181041.8**

(22) Date of filing: **20.08.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.12.2012 TW 101149086**

(71) Applicant: **Zong Jing Investment
Taipei City 114 (TW)**

(72) Inventor: **Hsueh-Ling Wong, Charlene
114 Taipei (TW)**

(74) Representative: **Syrtsova, Ekaterina
Murgitroyd & Company
Scotland House
165-169 Scotland Street
Glasgow, Strathclyde G5 8PL (GB)**

(54) **Method for moving color-makeup tool of automatic color-makeup machine**

(57)     A method for moving a color-makeup tool of an automatic color-makeup machine includes: driving a moving platform to carry a picture capturing module and a color-makeup tool to move relative to a part, to undergo makeup, of a user; during movement of the moving platform, by the picture capturing module, sequentially capturing pictures of the part to undergo makeup to obtain multiple pictures respectively; sequentially comparing an image difference between two consecutively captured pictures among the pictures; determining, according to a comparison result of the image difference, whether the moving platform is positioned; and when the moving platform is positioned, by using the color-makeup tool, performing makeup on the part to undergo makeup.

FIG. 1

EP 2 747 030 A2

**Description**

**Field of the Invention**

The present invention relates to a method for moving a color-makeup tool of an automatic color-makeup machine.

**Background of the Invention**

Wanting to be beautiful is a natural human desire, so various major manufacturers provide the market with a wide variety of care products and cosmetics for consumers to purchase. However, in order to compose makeup that a person likes and is suitable to the person, makeup techniques must be practiced repeatedly, and various cosmetics and makeup tools purchased, so as to draw various eyebrow shapes, various eye lines, eyelashes, eye contours, face makeup, labial makeup, appearance modifications, and various color changes. However the difference in proficiency in the makeup techniques and the wide range of cosmetics usually results in a difference between the effect of the makeup and the effect expected by the consumer.

As the information technology evolves constantly, a simulation device for trying color-makeup or a care product is provided by some research. Through the simulation device for trying color-makeup or a care product, a user may simulate an effect of makeup on a screen before purchase instead of trying a color-makeup product in person. However, the simulating the effect of the color-makeup on the screen still depends on manual makeup skills that apply the color-makeup on the human face. Further, the real effect of manual makeup performed by the user is not necessarily equal to the effect simulated and presented on the screen.

Therefore, if automatic control can be applied to perform color-makeup, a color-makeup effect simulated on the screen may be presented more truly. For automatic control in a three-dimensional space, generally information on a relative distance is provided through a laser beam, an infrared ray, or ultrasonic waves. However, a laser range-finding device is expensive. Further, the use of laser range-finding has risk of harming the human body, and is therefore not applicable to range-finding applications regarding relative movement of the human body. An infrared range-finding device is cheap, easy to manufacture, and safe, but has low accuracy and poor directionality. Ultrasonic range-finding is greatly affected by a surrounding environment, and therefore has low accuracy.

**Summary of the Invention**

In an embodiment, a method for moving a color-makeup tool of an automatic color-makeup machine includes: driving a moving platform to carry a picture capturing module and a color-makeup tool to move relative to a part, to undergo makeup, of a user; during movement of the moving platform, by the picture capturing module, sequentially capturing pictures of the part to undergo makeup to obtain a plurality of pictures respectively; sequentially comparing an image difference between two consecutively captured pictures among the pictures; determining, according to a comparison result of the image difference, whether the moving platform is positioned; and when the moving platform is positioned, by using the color-makeup tool, performing makeup on the part to undergo makeup.

In some embodiments, the step of comparing the image difference between each two pictures may include: performing feature analysis on each picture to obtain a feature image, corresponding to a same feature of the part to undergo makeup, in the picture; and calculating a size change between the feature images of the two pictures by a processing unit.

In this case, the step of determining whether the moving platform is positioned may include: calculating, according to the size change and a movement distance of the moving platform between the two pictures are captured, a distance between the moving platform and the part to undergo makeup by the processing unit; comparing the calculated distance with a threshold; and when the distance is smaller than or equal to the threshold, determining that the moving platform is positioned.

The size change may be an image magnification between the feature images of the two pictures.

The position of the part to undergo makeup is fixed.

In some embodiments, the step of comparing the image difference between the each two pictures may include: performing edge analysis on the two pictures, to obtain an edge in each of the pictures; and calculating a change amount between the edges of the two pictures.

In this case, the step of determining whether the moving platform is positioned may include: comparing the calculated change amount with a specified change amount; and when the calculated change amount has the specified change amount, determining that the moving platform is positioned.

The step of comparing the image difference between the each two pictures may further include: before edge analysis is performed on at least one of the two pictures, adjusting, according to positions of the moving platform and camera parameters of the picture capturing module when the two pictures are obtained, a size of a picture, not undergoing

the edge analysis, among the two pictures. In this case, the edge analysis step includes: performing edge analysis on a picture, not undergoing size adjustment, among the two pictures; and performing edge analysis on the adjusted picture.

The step of comparing the image difference between the each two pictures may further include: before the change amount is calculated, adjusting a size of the image of the edge of one of the two pictures according to positions of the moving platform and camera parameters of the picture capturing module when the two pictures are obtained. In this case, the step of calculating the change amount includes: calculating a change amount between the edge, not undergoing image size adjustment, among the edges and the adjusted edge.

In some embodiments, the change amount may be a difference between the edges regarding the number of pixels. In this case, the edge may include an image of a front end of the color-makeup tool and an image of an indentation on the part to undergo makeup.

In some embodiments, the change amount may be a difference between the edges regarding corresponding positions. In this case, the edge may include an image of a front end of the color-makeup tool.

In some embodiments, the step of performing edge analysis on each of the pictures includes: performing feature analysis on the picture to obtain an image of a front end of the color-makeup tool in the picture; expanding an analysis window centered around the image of the front end; and performing edge analysis on a picture block, in the analysis window, of the picture to obtain the edge. A size of the analysis window is smaller than a size of the picture to which the analysis window belongs.

In this case, the edge may include an image of a front end of the color-makeup tool. Further, the edge may further include an image of an indentation on the part to undergo makeup.

In view of the above, the method for moving a color-makeup tool of an automatic color-makeup machine according to the present invention performs color-makeup through automatic control, so as to more truly present a color-makeup effect simulated on a screen. Further, in the method for moving a color-makeup tool of an automatic color-makeup machine according to the present invention, it is accurately and safely determined according to the picture change whether the moving platform is positioned.

The invention is defined in the appended claims.

## Brief description of the drawings

The present invention will become more fully understood from the detailed description given herein below for illustration only, and thus not limitative of the present invention, wherein:

FIG. 1 is a schematic three-dimensional view of an automatic color-makeup machine according to an embodiment of the present invention;
FIG. 2 is a schematic block diagram of an automatic color-makeup machine according to an embodiment of the present invention;
FIG. 3 is a flow chart of a method for moving a color-makeup tool of an automatic color-makeup machine according to a first embodiment of the present invention;
FIG. 4 and FIG. 5 are flow charts of a method for moving a color-makeup tool of an automatic color-makeup machine according to a second embodiment of the present invention;
FIG. 6 is a schematic view of a first embodiment of a first picture;
FIG. 7 is a schematic view of a first embodiment of a second picture;
FIG. 8 and FIG. 9 are flow charts of a method for moving a color-makeup tool of an automatic color-makeup machine according to a third embodiment of the present invention;
FIG. 10 is a detailed flow chart of an embodiment of Step S357;
FIG. 11 is a detailed flow chart of an embodiment of Step S359;
FIG. 12 is a partial flow chart according to a fourth embodiment of the present invention;
FIG. 13 is a partial flow chart according to a fifth embodiment of the present invention;
FIG. 14 is a partial flow chart according to a sixth embodiment of the present invention;
FIG. 15 is a partial flow chart according to a seventh embodiment of the present invention;
FIG. 16 is a schematic view of a second embodiment of a first picture;
FIG. 17 is a schematic view of a second embodiment of a second picture;
FIG. 18 is a partial flow chart according to an eighth embodiment of the present invention;
FIG. 19 is a schematic view of a third embodiment of a first picture; and
FIG. 20 is a schematic view of a third embodiment of a second picture.

## Detailed description

Terms such as "first" and "second" in the following description are used for distinguishing elements, but not used for sequencing or limiting differences between the elements, and not used for limiting the scope of the present invention.

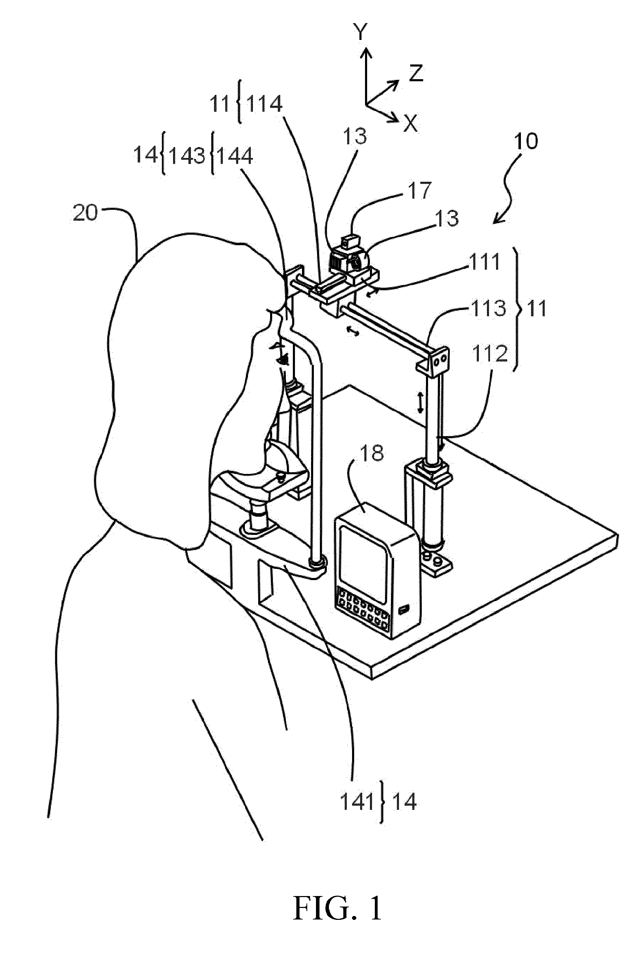

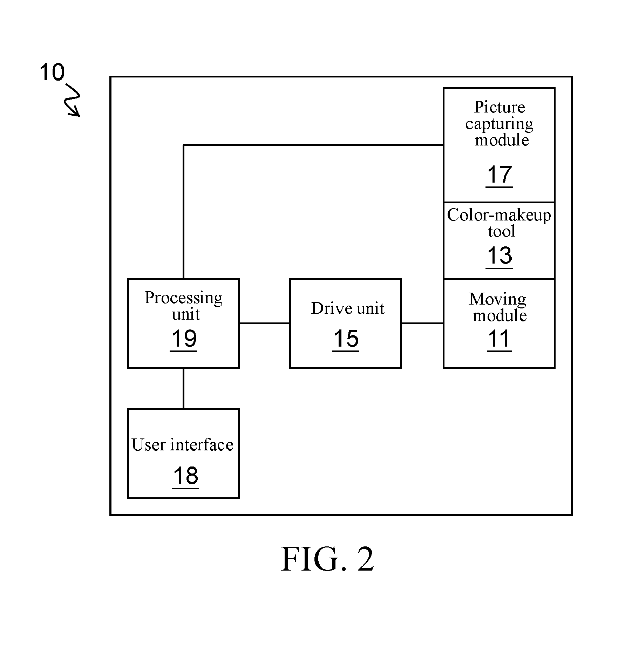

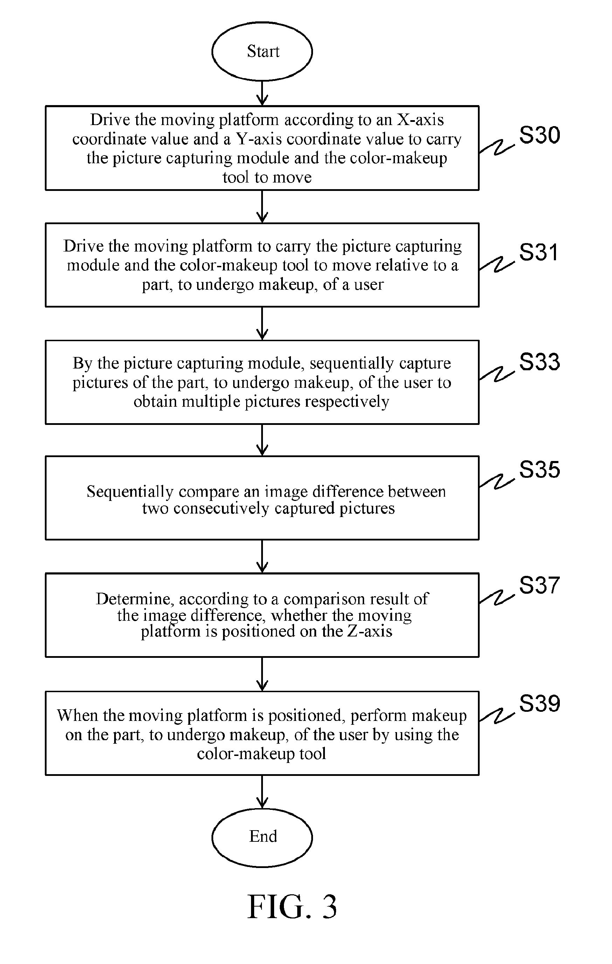

Please refer to FIG. 1 to FIG. 3, an automatic color-makeup machine 10 includes a moving module 11, a color-makeup tool 13, a fixing module 14, a drive unit 15, a picture capturing module 17, a user interface 18, and a processing unit 19.

The processing unit 19 is connected electrically to the drive unit 15, the picture capturing module 17, and the user interface 18.

The user interface 18 enables a user to perform color-makeup design on a two-dimensional picture, so as to generate a makeup instruction corresponding to a color-makeup design result. In this case, the processing unit 19 may automatically apply a makeup material to a surface of a user 20 through the color-makeup tool 13 according to the makeup instruction, to perform makeup.

The moving module 11 includes a moving platform 111, a lifter 112, a horizontal rail 113, and a telescopic platform 114. The horizontal rail 113 spans on the lifter 112, and by adjusting the lifter 112, the horizontal rail 113 is enabled to move vertically along a first direction (for example, the Y-axis direction in the drawing). The telescopic platform 114 is slidably disposed on the horizontal rail 113, and the telescopic platform 114 can move left and right on the horizontal rail 113 along a second direction (for example, the X-axis direction in the drawing). The moving block 111 is disposed on the telescopic platform 114, and the moving block 111 can move back and forth on the telescopic platform 114 along a third direction (for example, the Z-axis direction in the drawing).

Herein, the drive unit 15 (for example, a motor), controlled by the processing unit 19 carries the moving platform 111, the lifter 112 and the telescopic platform 114, so that the moving platform 111 can move in a three-dimensional manner accordingly to be precisely positioned.

The color-makeup tool 13 and the picture capturing module 17 are disposed on the moving platform 111. Herein, under the condition of being capable of being carried by the moving platform 111 (that is, being capable of moving along with the moving platform 111), the color-makeup tool 13 and the picture capturing module 17 may be disposed directly or indirectly on the moving platform 111. Herein, a sensing surface of the picture capturing module 17 faces a part, to undergo makeup, of the user 20 (for example, the face, an eye, a nail, a hand back, or an arm).

Herein, according to an application manner of the makeup material, the color-makeup tool 13 may be of a contact type, a non-contact type, or a combination thereof. A non-contact color-makeup tool 13 is, for example, a spray head, a nozzle, or an equivalent tool thereof. A non-contact color-makeup tool 13 may have one or more output holes, and the output hole thereof is used for spraying the makeup material to a surface of the part, to undergo makeup, of the user 20. A contact color-makeup tool 13 is, for example, a powder brush, a powder puff, a coating pen, or an equivalent tool thereof. A contact color-makeup tool 13 may have one or more front ends (for example, the free end of bristles or a tip), and the front end is used for coating the surface of the part, to undergo makeup, of the user 20 with the makeup material.

The part, to undergo makeup, of the user 20 is disposed on the fixing module 14, to fix the position of the user 20. In some embodiments, taking the face (that is, the part to undergo makeup), as an example, the fixing module 14 includes a lower-jaw support 141 and an overhead positioning member 143. The lower-jaw support 141 is used by the user to place the lower jaw thereof, to support the head (face), of the user 20. The overhead positioning member 143 is disposed above the lower-jaw support 141. Herein, the overhead positioning member 143 has an arc-shaped holding portion 144 corresponding to the forehead. During use, the user 20 may urge the forehead thereof against the holding portion 144 of the overhead positioning member 143, and urge the chin against the lower-jaw support 141, so as to ensure that the face of the user 20 is opposite to the position of the moving module 111.

The makeup instruction has two-dimensional track information formed of multiple positioning points. Each positioning point is formed of an X-coordinate value and a Y-coordinate value. The processing unit 19 positions the moving platform 111 sequentially according to the positioning points in the makeup instruction.

According to the X-axis coordinate values and the Y-axis coordinate values of the positioning points, the processing unit 19 uses the drive unit 15 to control positions of the moving platform 111 on the X-axis and on the Y-axis (Step S30), and implements a method for moving the color-makeup tool of the automatic color-makeup machine according to the present invention to control and determine a position of the moving platform 111 on the Z-axis. In other words, the method for moving the color-makeup tool of the automatic color-makeup machine according to the present invention may be implemented by a software program capable of being executed by the processing unit 19.

The control, by the processing unit 19, of a movement position of the moving platform 111 on the Z-axis is illustrated below for demonstration.

The processing unit 19 controls, according to a makeup instruction, the drive unit 15 to drive the moving platform 111, so that the moving platform 111 carries the picture capturing module 17 and the color-makeup tool 13 to move relative to a part, to undergo makeup, of the user 20, that is, to move along the Z-axis (Step S31).

During movement of the moving platform 111, the picture capturing module 17 sequentially captures pictures of the part, to undergo makeup, of the user 20, to obtain multiple pictures respectively (Step S33).

The processing unit 19 receives the pictures captured by the picture capturing module 17. Further, the processing unit 19 sequentially compares an image difference between two consecutively captured pictures (Step S35).

The processing unit 19 determines, according to a comparison result of the image difference, whether the moving platform 111 is positioned on the Z-axis (Step S37).

When the moving platform 111 is positioned, makeup is performed on the part, to undergo makeup, of the user 20 by using the color-makeup tool 13 (Step S39).

Step 35 and Step 37 may include implementations such as analyzing a picture size change and analyzing an edge change in a picture.

For convenience of description, in the following, a position that is reached first is called a first position, a next position that is reached after the first position is called a second position, a picture that is captured first (that is, a picture captured at the first position). is called a first picture, and a picture that is captured after the first picture (that is, a picture captured at the second position). is called a second picture.

The implementation of analyzing the picture size change is exemplarily illustrated first.

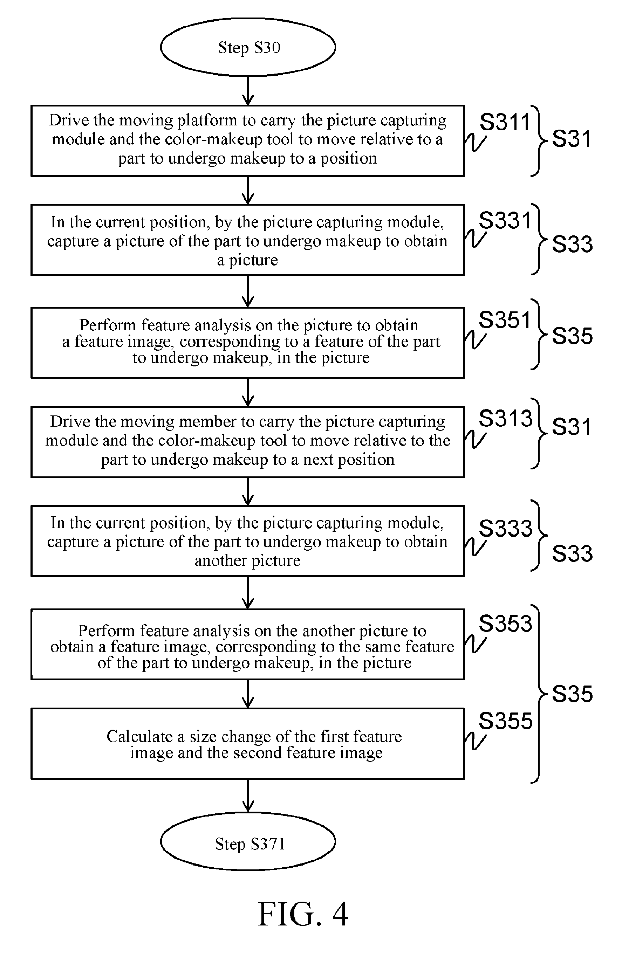

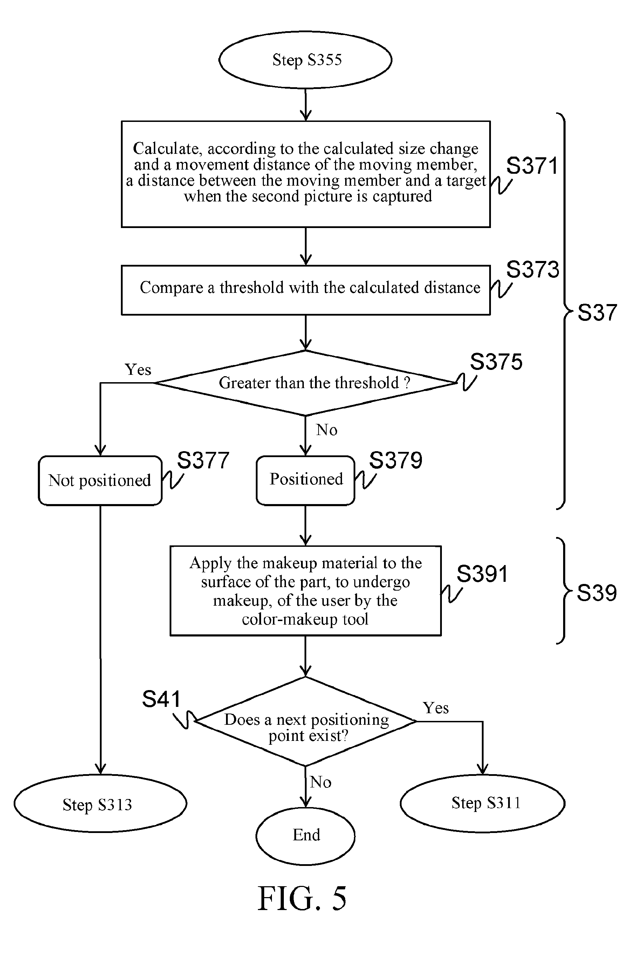

Please refer to FIG. 4 and FIG. 5, in which the processing unit 19 controls the drive unit 15 to drive the moving platform 111 to approach a part, to undergo makeup, of the user 20, so that the moving platform 111 carries the color-makeup tool 13 and the picture capturing module 17 thereon to move to a first position (Step S311).

In the current position (the first position at the moment), the disposed picture capturing module 17 is used to capture a picture of the part, to undergo makeup, of the user 20, to obtain a first picture (Step S331).

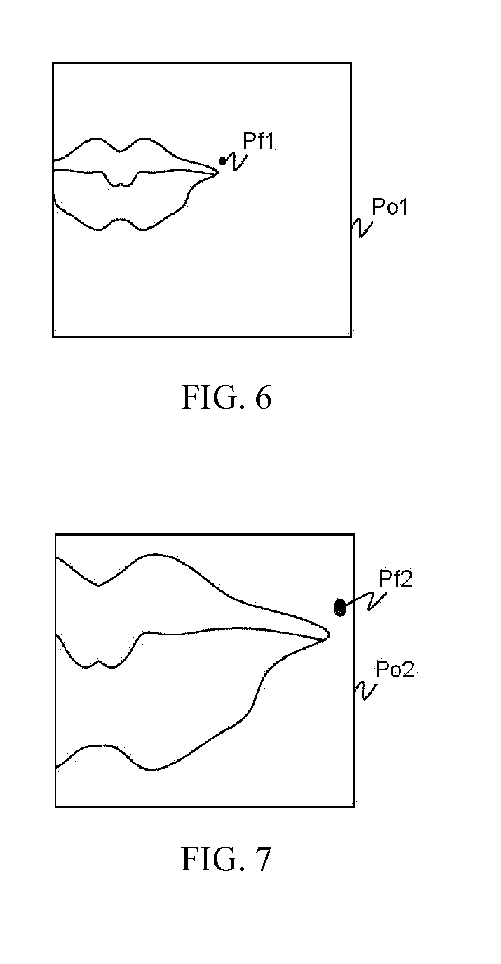

The processing unit 19 receives the first picture, and performs feature analysis on the first picture to obtain a feature image of the first picture (which is called the first feature image in the following for convenience of description) (Step S351). Please refer to FIG. 6, in which the first picture Po1 includes a first feature image Pf1 corresponding to a feature of the user 20. For example, when the face (of the user 20), has a mole (a feature of the user 20), the captured first picture Po1 includes an image of the mole (that is, the first feature image Pf1).

After the first picture is captured, the processing unit 19 then controls the drive unit 15 to drive the moving platform 111 to approach the part, to undergo makeup, of the user 20, so that the moving platform 111 carries the color-makeup tool 13 and the picture capturing module 17 thereon to move from the first position to a next position (that is, a second position) (Step S313).

Then, in the current position (the second position at the moment), the picture capturing module 17 is used to capture a picture of the part, to undergo makeup, of the user 20 again, to obtain a second picture (Step S333).

The processing unit 19 receives the second picture, and performs feature analysis on the second picture to obtain a feature image of the second picture (which is called the second feature image in the following for convenience of description) (Step S353). Please refer to FIG. 7, in which the second picture Po2 includes a second feature image Pf2 corresponding to a feature of the user 20. Further, the second feature image Pf2 in the second picture Po2 and the first feature image Pf1 in the first picture Po1 correspond to the same feature of the user 20. For example, when the face (of the user 20), has a mole (a feature of the user 20), the processing unit 19 searches for an image of the mole (that is, the first feature image Pf1), in the captured first picture Po1 and an image of the same mole (that is, the second feature image Pf2) in the captured second picture Po2 respectively.

The processing unit 19 calculates a size change of the first feature image Pf1 and the second feature image Pf2 (Step S355). Herein, the processing unit 19 may obtain the size change by calculating an image magnification, such as an area ratio, a pixel ratio, or a picture length ratio, of the first feature image Pf1 and the second feature image Pf2.

Then, the processing unit 19 calculates, according to the calculated size change and a movement distance of the moving platform 111 (that is, a distance between the first position and the second position), a distance between the moving platform 111 and the part, to undergo makeup, of the user 20 when the second picture is captured, that is, a distance between the second position and the part, to undergo makeup, of the user 20 (Step S371).

For example, a magnification of the first picture is indicated by Equation 1 below, and a magnification of the second picture is indicated by Equation 2 below. Further, it can be seen from the first position and the second position that a relationship indicated by Equation 3 exists between P1 and P2.

$$h1/H = P1/Q \qquad\qquad \text{Equation 1}$$

$$h2/H = P2/Q \qquad\qquad \text{Equation 2}$$

$$P1 = P2 + X \qquad \text{Equation 3}$$

In the equations, h1 is a picture length of the first picture, H is an object height, P1 is an object distance when the first picture is captured, Q is an image distance of the picture capturing module, h2 is a picture length of the second picture, P2 is an object distance when the second picture is captured, and X is the distance between the first position and the second position. Further, when the second position is closer to the part, to undergo makeup, of the user 20 than the first position, X is a positive value. On the contrary, when the second position is farther from the part, to undergo makeup, of the user 20 than the first position, X is a negative value.

It can be seen from Equation 1, Equation 2, and Equation 3 that a relationship indicated by Equation 4 below exists between the first picture and the second picture.

$$P2 = \frac{X}{\dfrac{h1}{h2} - 1} \qquad \text{Equation 4}$$

In the equation, h1/h2 represents the size change between the first feature image Pf1 and the second feature image Pf2.

In some embodiments, it is assumed that the calculated distance is used for determining a distance between the output hole or the front end of the color-makeup tool 13 and the surface of the part, to undergo makeup, of the user 20. When elements are assembled, the output hole of the color-makeup tool 13 may be aligned with a lens of the picture capturing module 17; or a relative distance between the output hole of the color-makeup tool 13 and the lens of the picture capturing module 17 is also taken into account when the processing unit 19 calculates the distance (Step S371) or sets a threshold used for determination.

Then, the processing unit 19 compares the calculated distance with the threshold (Step S373), so as to determine whether the calculated distance is greater than the threshold (Step S375).

When the distance is greater than the threshold, the processing unit 19 determines that the moving platform 111 does not reach the position (Step S377), and the processing unit 19 further controls the drive unit 15 to drive the moving platform 111 to move towards the part, to undergo makeup, of the user 20, so that the moving platform 111 moves to a next position (Step S313). Then, the disposed picture capturing module 17 is used to capture a picture of the part, to undergo makeup, of the user 20 again, to obtain a next picture (Step S333). At the moment, in a step that follows, the picture captured in previous Step S333 may be directly used as the first picture, and the new picture captured in Step S333 of this time may be used as the second picture. In this case, feature analysis is not required to be performed on the first picture again (that is, Step S351 is not required to be executed), and instead in Step S355 a previously obtained feature analysis result is directly used (that is, the second feature image obtained by analyzing in previous Step S353 is used as the first feature image), for calculation.

When the distance is smaller than or equal to the threshold, the processing unit 19 determines that the moving platform 111 is positioned (Step S379), and then controls the color-makeup tool 13 to apply the makeup material to the surface of the part, to undergo makeup, of the user 20 (Step S391). After the application step (Step S391) is completed, when the moving platform 111 is not required to move for a next positioning point (Step S41), the processing unit 19 controls the drive unit 15 to stop the moving platform 111. When the moving platform 111 is required to move for a next positioning point (Step S41), the processing unit 19 controls the drive unit 15 to drive the moving platform 111 to move to the next positioning point, that is, Step S311 is returned to and the steps are executed again.

In some embodiments, the threshold may be within a specific range defined by a first value and a second value. The first value is smaller than the second value.

In other words, the processing unit 19 compares the calculated distance with the specified range (Step S375).

When a comparison result in Step S375 is that the distance falls between the first value and the second value (that is, is equal to the first value or the second value, or is greater than the first value and smaller than the second value), the processing unit 19 determines that the moving platform 111 is positioned (Step S379).

When a comparison result in Step S375 is that the distance is smaller than the first value, the processing unit 19 determines that the moving platform 111 is not positioned (Step S377), and controls the drive unit 15 to drive again the moving platform 111 to move in a direction leaving the part, to undergo makeup, of the user 20, so that the moving platform 111 moves to a next position, that is, Step S313 is returned to and the steps are executed again.

When a comparison result in Step S375 is that the distance is greater than the second value, the processing unit 19 determines that the moving platform 111 is not positioned (Step S411), and controls the drive unit 15 to drive again the moving platform 111 to move towards the part, to undergo makeup, of the user 20, so that the moving platform 111 moves to a next position, that is, Step S313 is returned to and the steps are executed again.

Although the first feature image Pf1 and the second feature image Pf2 are, for example, images of a mole, the present invention is not limited thereto. In some embodiments, the feature images (that is, the first feature image Pf1 and the second feature image Pf2), may be a point (for example, images of a mole, images of a scar-like mark, or images of a pimple), a line (for example, images of a hair such as an eye-lash, a body hair, a head hair, or a mole hair or images of a scar), or any complete pattern in the pictures.

In some embodiments, when the part, to undergo makeup, of the user 20 does not have any feature thereon, whether positioning is achieved may be determined by detecting whether the front end of the color-makeup tool 13 contacts the part, to undergo makeup, of the user 20 (that is, the implementation of analyzing an edge change in a picture).

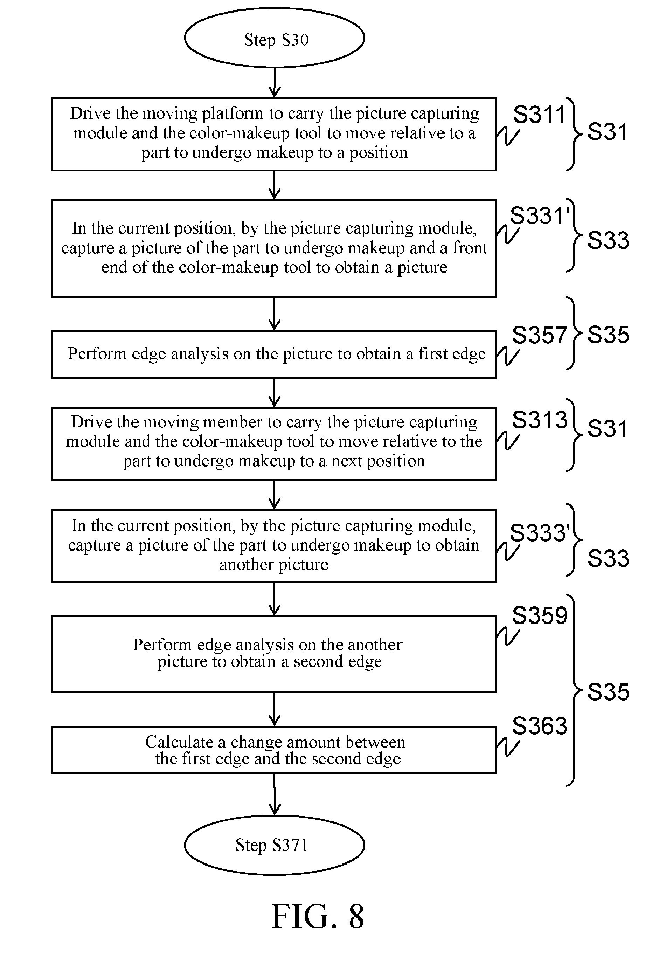

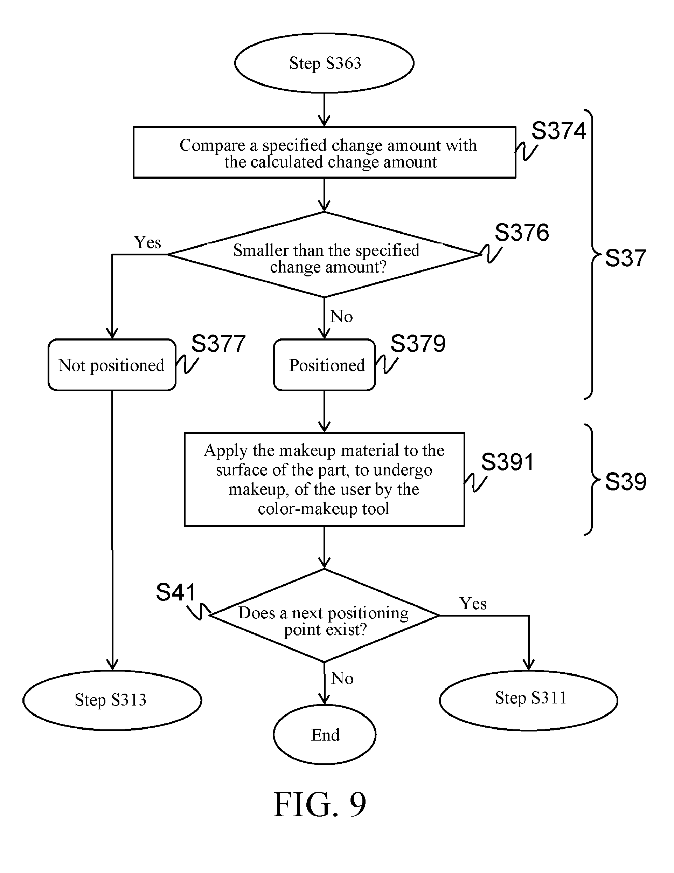

Please refer to FIG. 8 and FIG. 9, in which in other words, in Step S33, the picture captured by the picture capturing module 17 further includes the image of the front end of the color-makeup tool 13 in addition to the image of the part, to undergo makeup, of the user 20 (Step S332 and Step S334).

The processing unit 19 performs edge analysis on a first picture among two adjacent pictures to obtain a first edge (Step S357), and performs edge analysis on a second picture among the two adjacent pictures to obtain a second edge (Step S359).

Then, the processing unit 19 calculates a change amount between the first edge and the second edge (Step S363), and compares the calculated change amount with a specified change amount (Step S374), so as to determine whether the change amount between the two reaches the specified change amount (Step S376).

When the change amount between the first edge and the second edge has the specified change amount (that is, the calculated change amount is smaller than or equal to the specified change amount), the processing unit 19 determines that the moving platform 111 is positioned (Step S379). At the moment, the processing unit 19 controls the color-makeup tool 13 to apply the makeup material to the surface of the part, to undergo makeup, of the user 20 (Step S391).

After the application step (Step S391) is completed, when the moving platform 111 is not required to move for a next positioning point (Step S41), the processing unit 19 controls the drive unit 15 to stop the moving platform 111. When the moving platform 111 is required to move for a next positioning point (Step S41), the processing unit 19 controls the drive unit 15 to drive the moving platform 111 to move to the next positioning point, that is, Step S311 is returned to and the steps are executed again.

When the change between the first edge and the second edge does not exist or does not reach the specified change amount (that is, the calculated change amount is smaller than the specified change amount), the processing unit 19 determines that the moving platform 111 is not positioned (Step S377), and the processing unit 19 further controls the drive unit 15 to drive the moving platform 111 to move towards the part, to undergo makeup, of the user 20, so that the moving platform 111 moves to a next position (Step S313). Then, the disposed picture capturing module 17 is used to capture a picture of the part, to undergo makeup, of the user 20 again, to obtain a next picture (Step S333'). At the moment, in a step that follows, the picture captured in previous Step S334 may be directly used as the first picture, and the new picture captured in Step S333' of this time may be used as the second picture. In this case, edge analysis is not required to be performed on the first picture again (that is, Step S357 is not required to be executed), and instead in Step S363 a previously obtained edge analysis result is directly used (that is, the second edge obtained by analyzing in previous Step S357 is used as the first edge) for calculation.

In some embodiments, when the change amount between the first edge and the second edge reaches the specified change amount, it indicates that the front end of the color-makeup tool 13 already contacts the part, to undergo makeup, of the user 20, so that the movement of the moving platform 111 may be stopped, so as to perform makeup.

When the change between the first edge and the second edge does not exist or does not reach the specified change amount, it indicates that the front end of the color-makeup tool 13 does not contact or just contacts the part, to undergo makeup, of the user 20, so that the moving platform 111 may be further driven to move towards the part, to undergo makeup, of the user 20.

In some embodiments, the specified change amount may be within a specified range defined by a first threshold and a second threshold. The first threshold is smaller than the second threshold.

In other words, in Step S374, the processing unit 19 compares the calculated change amount with the specified range.

When a comparison result in Step S376 is that the change amount falls between the first threshold and the second threshold (that is, is equal to the first threshold or the second threshold, or is greater than the first threshold and smaller than the second threshold), the processing unit 19 determines that the moving platform 111 is positioned (Step S379), controls the drive unit 15 to stop driving the moving platform 111, and controls the color-makeup tool 13 to perform makeup (Step S391).

When a comparison result in Step S376 is that the change amount is smaller than the first threshold, the processing unit 19 determines that the moving platform 111 is not positioned (Step S377), and further controls the drive unit 15 to drive the moving platform 111 to approach the part, to undergo makeup, of the user 20, so that the moving platform 111 moves to a next position (Step S313).

When a comparison result in Step S376 is that the change amount is greater than the second threshold, the processing unit 19 determines that the moving platform 111 is not positioned (Step S377), and further controls the drive unit 15 to drive the moving platform 111 to move in a direction leaving the part, to undergo makeup, of the user 20, so that the moving platform 111 moves to a next position (Step S313).

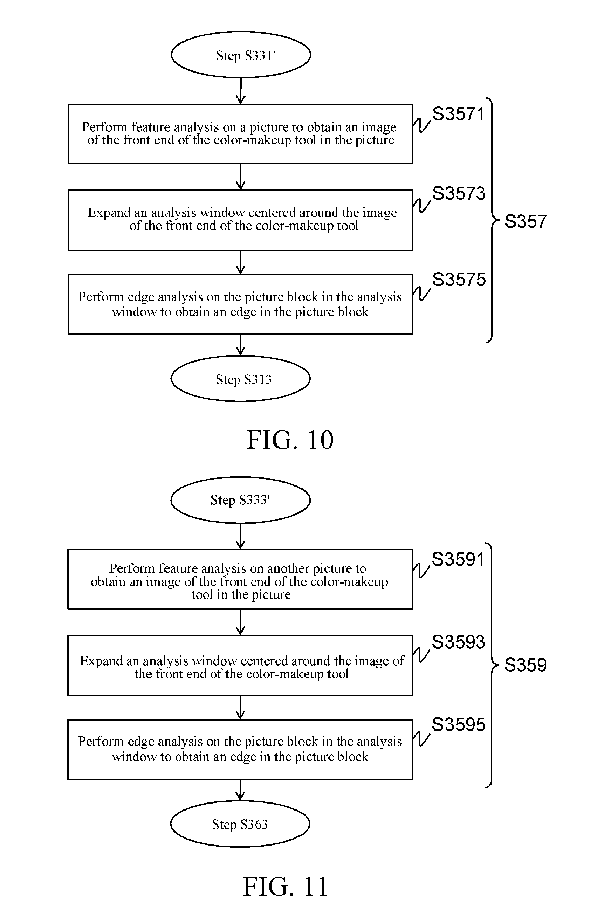

In some embodiments, please refer to FIG. 10 and FIG. 11, in which during edge analysis of each picture (Step S357 or Step S359), the processing unit 19 may first perform feature analysis on the picture (the first picture or the second picture), to obtain an image of the front end of the color-makeup tool 13 in the picture (Step S3571 or Step S3591), and expands an analysis window centered around the image of the front end of the color-makeup tool 13 (Step S3573 or Step S3593). A size of the picture block displayed by the analysis window is smaller than that of the original picture.

Then, the processing unit 19 performs edge analysis on the picture block in the analysis window, to obtain an edge in the picture block (a first edge or a second edge) (Step S3575 or Step S3595).

In some embodiments, before calculating the change amount, the processing unit 19 may first perform size adjustment on one of two consecutively obtained pictures (or edge images thereof), so that the two consecutively obtained pictures (or the edge images thereof) have the same magnification.

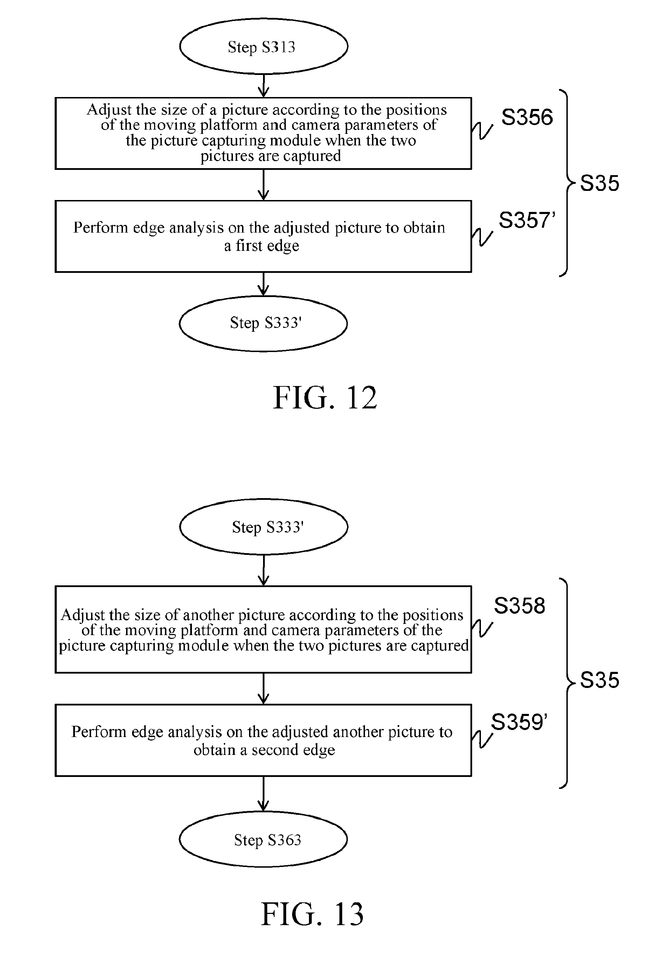

In some embodiments, please refer to FIG. 12 and FIG. 13, in which before performing the edge analysis, the processing unit 19 may first adjust a picture size of one of the two pictures (that is, the first picture or the second picture), according to the positions of the moving platform 111 (that is, the first position and the second position). and camera parameters of the picture capturing module 17 (such as the focal length and the image distance) when the two pictures are captured (Step S356 or Step S358), so that the two pictures have the same magnification. Then, the processing unit 19 performs edge analysis on the adjusted first picture or the adjusted second picture, to obtain an edge in the picture (Step S357' or Step S359').

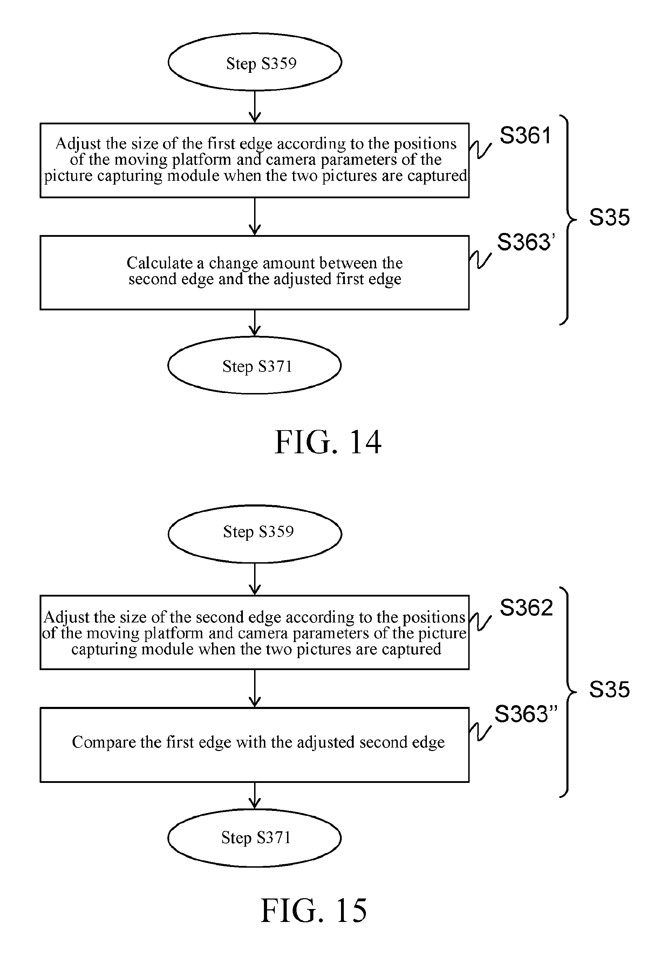

In some embodiments, please refer to FIG. 14, in which after the first edge is obtained (Step S357), the processing unit 19 may directly adjust the size of the edge image of the first edge according to the first position, the second position, and the camera parameters of the picture capturing module 17 (Step S361), and then compare the second edge with the adjusted first edge to obtain a change amount between the two (Step S363').

In some embodiments, please refer to FIG. 15, in which after the second edge is obtained (Step S359), the processing unit 19 may directly adjust the size of the edge image of the second edge according to the first position, the second position, and the camera parameters of the picture capturing module 17 (Step S362), and then compares the first edge with the adjusted second edge to obtain a change amount between the two (Step S363").

When the processing unit 19 adjusts the size of the first obtained picture (that is, the first picture), or the edge image thereof (that is, the first edge), Step S356 or Step S361 is required to be executed after the processing unit 19 obtains information of the second position (that is, after Step S313).

When the distance between the first position and the part, to undergo makeup, of the user 20 is greater than the distance between the second position and the part, to undergo makeup, of the user 20, in Step S356 or Step S361, the processing unit 19 zooms in the first picture or the first edge according to the first position, the second position, and the camera parameters of the picture capturing module 17.

Further, when the distance between the first position and the part, to undergo makeup, of the user 20 is greater than the distance between the second position and the part, to undergo makeup, of the user 20, in Step S358 or Step S362, the processing unit 19 zooms out the second picture or the second edge according to the first position, the second position, and the camera parameters of the picture capturing module 17.

On the contrary, when the distance between the first position and the part, to undergo makeup, of the user 20 is smaller than the distance between the second position and the part, to undergo makeup, of the user 20, in Step S356 or Step S361, the processing unit 19 zooms out the first picture or the first edge according to the first position, the second position, and the camera parameters of the picture capturing module 17.

Further, when the distance between the first position and the part, to undergo makeup, of the user 20 is greater than the distance between the second position and the part, to undergo makeup, of the user 20, in Step S358 or Step S362, the processing unit 19 zooms in the second picture or the second edge according to the first position, the second position, and the camera parameters of the picture capturing module.

For example, a magnification of the first picture is indicated by Equation 5 below, and a magnification of the second picture is indicated by Equation 6 below. Further, it can be seen from the first position and the second position that a relationship indicated by Equation 7 exists between P1 and P2.

$$h1/H=P1/Q \qquad \text{Equation 5}$$

$$h2/H=P2/Q \qquad \text{Equation 6}$$

$$P1=P2+X \qquad \text{Equation 7}$$

In the equations, h1 is a picture length of the first picture, H is an object height, P1 is an object distance when the first picture is captured, Q is an image distance of the picture capturing module, h2 is a picture length of the second picture, P2 is an object distance when the second picture is captured, and X is the distance between the first position and the second position.

According to Equation 5, Equation 6, Equation 7, and a basic optical formula (Equation 8), it can be seen that a relationship indicated by Equation 9 below exists between the first picture and the second picture.

$$1/P2+1/Q=1/f2 \qquad \text{Equation 8}$$

$$h1/h2=1+X/P2=1+X(1/f2+1/Q) \qquad \text{Equation 9}$$

In the equations, f2 is the focal length when the second picture is captured.

Therefore, the processing unit 19 may adjust the picture size or the edge image size according to Equation 9.

In some embodiments, the edge change (the change amount between the first edge and the second edge), may correspond to a deformation incurred to the front end of the color-makeup tool 13 by contact with the part, to undergo makeup, of the user 20, or an indentation (for example, a recess or lines), incurred to the part, to undergo makeup, of the user 20 by pressing of the front end of the color-makeup tool 13.

For example, if the front end of the color-makeup tool 13 is not deformed when the second picture is captured, the position of the first edge in the first picture (that is, an edge of the image of the front end of the color-makeup tool 13), and the position of the second edge in the second picture (that is, an edge of the image of the front end of the color-makeup tool 13), are substantially the same, that is, the position of the second edge falls on the corresponding position of the first edge in the second picture.

If the front end of the color-makeup tool 13 is deformed due to contact with the part, to undergo makeup, of the user 20 when the second picture is captured, the position of the first edge and the position of the second edge do not correspond, that is, the position of the second edge offsets and is therefore not in the corresponding position of the first edge.

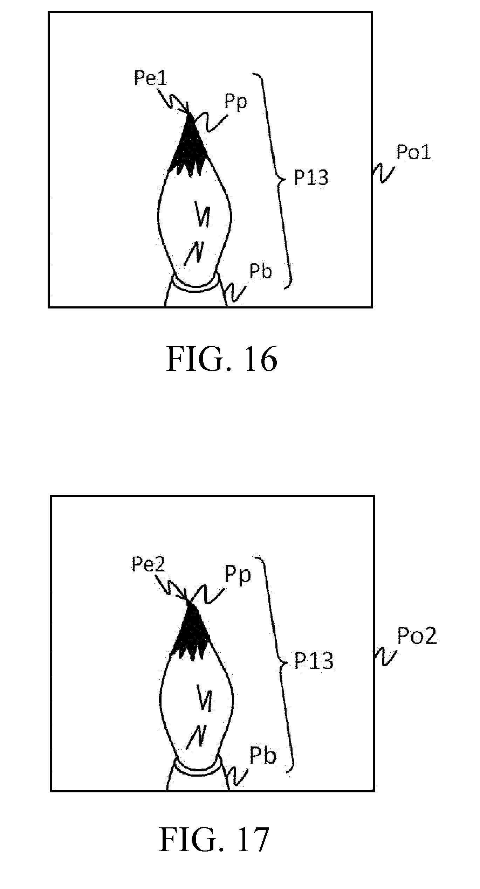

For example, the color-makeup tool 13 is a writing brush and the part to undergo makeup is a cheek of the user 20, and when the moving platform 111 is in the first position, the writing brush does not contact the cheek of the user 20. At the moment, a first picture Po1 captured by the picture capturing module 17 in the first position includes an image Pp of a tip of the writing brush (that is, a picture, corresponding to the front end of the color-makeup tool 13, in an image P13 of the color-makeup tool 13), as shown in FIG. 16. Please refer to FIG. 16, in which after edge analysis is performed on the first picture Po1, the obtained first edge is a tip edge Pe1 of the image Pp of the tip of the writing brush.

Then, when the moving platform 111 is in the second position, the writing brush contacts the cheek of the user 20. At the moment, a second picture Po2 captured by the picture capturing module 17 in the second position also includes an image Pp of the tip of the writing brush (that is, a picture, corresponding to the front end of the color-makeup tool 13, in the image P13 of the color-makeup tool 13), but the writing brush is deformed because of pressing the cheek, as shown in FIG. 17. Please refer to FIG. 17, in which after edge analysis is performed on the second picture Po2, the obtained second edge is a tip edge Pe2 of the image Pp of the tip of the writing brush.

When the tip edge Pe1 is compared with the tip edge Pe2, it can be seen that positions of a part of pixels in the tip edge Pe2 are different from those of the corresponding pixels in the tip edge Pe1. In other words, a change amount between the first edge and the second edge (that is, the number of pixels with the corresponding positions being different), falls between the first threshold and the second threshold, so that the processing unit 19 determines that the moving platform 111 is positioned in the position on the Z-axis.

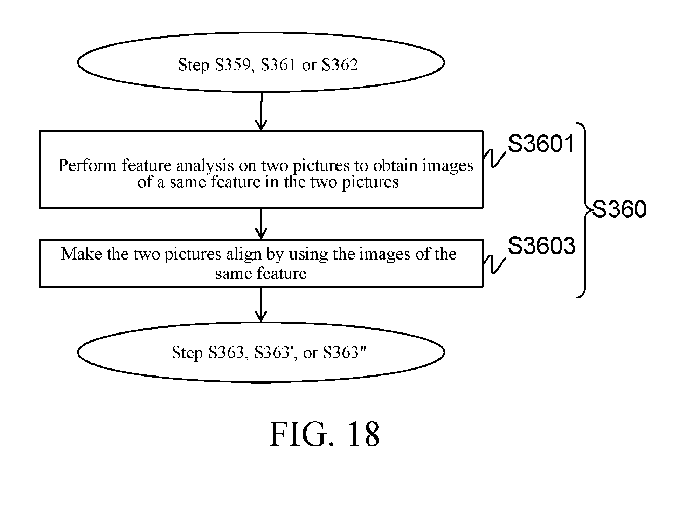

In some embodiments, please refer to FIG. 16 to FIG. 18, in which before Step S363 (or Step S363', or Step S363"), is performed, the processing unit 19 may first make the first picture and the second picture align (Step S360).

In Step S34, the processing unit 19 performs feature analysis on the first picture and the second picture to obtain images of a same feature of the first picture and the second picture (for example, images of a feature on the part, to undergo makeup, of the user 20, or images Pb of a body of the color-makeup tool 13) (Step S3601), and uses the images of the same feature to make the first picture and the second picture align (Step S3603). Then, the processing unit 19 calculates the change amount between the first edge and the second edge (Step S363, Step S363', or Step S363").

In another case, if the front end of the color-makeup tool 13 does not press the part, to undergo makeup, of the user 20 when the second picture is captured, the number of pixels of the first edge in the first picture (that is, the edge of the image of the front end of the color-makeup tool 13), is substantially the same as the number of pixels of the second edge in the second picture (that is, the edge of the image of the front end of the color-makeup tool 13).

If an indentation is incurred to the part, to undergo makeup, of the user 20 by the front end of the color-makeup tool 13 pressing the surface of the part, to undergo makeup, of the user 20 when the second picture is captured, the number of pixels of the first edge in the first picture (that is, the edge of the image of the front end of the color-makeup tool 13), is smaller than the number of pixels of the second edge in the second picture (that is, the edge of the image of the front end of the color-makeup tool 13 and an edge of an image of the indentation).

Further, even if the front end of the color-makeup tool 13 presses the surface of the part, to undergo makeup, of the user 20 when the first picture is captured and when the second picture is captured, the movement distances of the moving platform 111 are different, and the depth by which the front end of the color-makeup tool 13 presses when the first picture is captured is different from that when the second picture is captured, so that the size of the indentation incurred to the surface of the part, to undergo makeup, of the user 20 changes accordingly. For example, as the depth increases, the size of the indentation increases (a recess deepens or the number of lines increases). In this case, the number of pixels of the edge in the first picture is different from the number of pixels of the edge in the second picture because the sizes of the indentation are different (for example, as the size increases, the number of pixels increases).

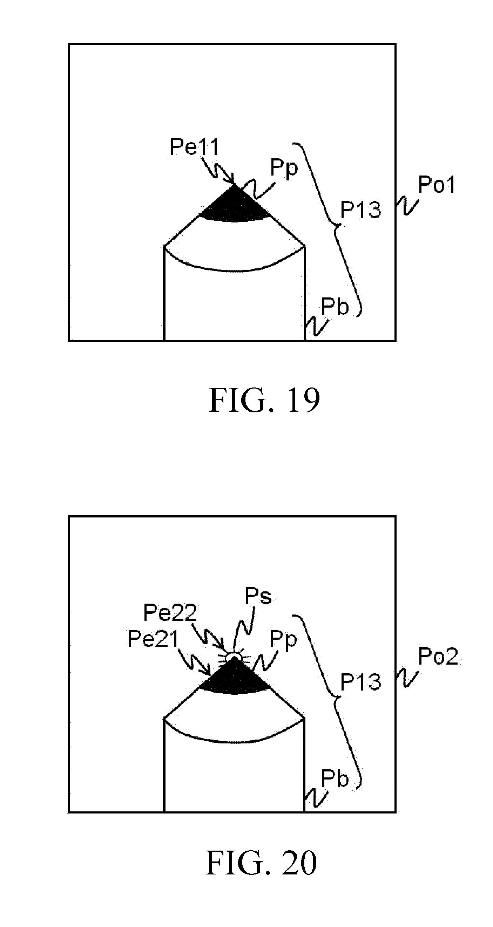

For another example, the color-makeup tool 13 is an eyebrow pencil, and when the moving platform 111 is in the first position, the eyebrow pencil does not contact a cheek of the user 20. At the moment, a first picture Po1 captured by the picture capturing module 17 in the first position includes an image Pp of a tip of the eyebrow pencil (that is, an image, corresponding to the front end of the color-makeup tool 13, in an image P13 of the color-makeup tool 13), as shown in FIG. 19. Please refer to FIG. 19, in which after edge analysis is performed on the first picture Po1, the obtained first edge is a tip edge Pe11 of the image Pp of the tip of the eyebrow pencil.

Then, when the moving platform 111 is in the second position, the eyebrow pencil contacts the cheek of the user 20. At the moment, a second picture Po2 captured by the picture capturing module 17 in the second position also includes an image Pp of the tip of the eyebrow pencil (that is, an image, corresponding to the front end of the color-makeup tool 13, in the image P13 of the color-makeup tool 13), and further includes an image Ps of an indentation incurred by the tip of the eyebrow pencil pressing the cheek, as shown in FIG. 20. Please refer to FIG. 20, in which after edge analysis is performed on the second picture Po2, the obtained second edge includes a tip edge Pe21 of the image Pp of the tip of the eyebrow pencil and an indentation edge Pe22 of the image Ps of the indentation.

When the first edge is compared with the second edge, it can be seen that the second edge has the indentation edge Pe22 that the first edge does not have. In other words, a change amount between the first edge and the second edge (that is, the number of pixels of the indentation edge Pe22), falls between the first threshold and the second threshold, so that the processing unit 19 determines that the moving platform 111 is positioned in the position on the Z-axis.

In some embodiments, in Step S35, the picture size change may be analyzed first, and when no feature can be found in Step S35, the edge change in the picture is analyzed subsequently instead, so as to determine, according to a corresponding edge change amount, whether positioning is achieved. For example, when no feature can be found in Step S351 or Step S353, Step S357 is executed instead, and subsequent steps are executed after Step S357.

The execution order of the steps is not limited by the present invention, and within a reasonable range, some steps may be swapped regarding the execution order or may be executed at the same time. For example, in some embodiments, after the picture capturing module 17 captures a picture, the processing unit 19 may immediately perform feature analysis on the captured picture. Alternatively, the processing unit 19 may perform feature analysis on a previously captured picture when the picture capturing module 17 captures a next picture. In other words, Step S351 may be executed between Step S331 and Step S313, or executed together with Step S313 or Step S353 at the same time, or executed between Step S313 and Step S353. In some embodiments, after the picture capturing module 17 captures a picture, the processing unit 19 may immediately perform edge analysis on the captured picture. Alternatively, the processing unit 19 may perform edge analysis on a previously captured picture when the picture capturing module 17 captures a next picture. In other words, Step S357 may be executed between Step S331' and Step S313, or executed together with Step S313 or Step S359 at the same time, or executed between Step S313 and Step S359.

In some embodiments, the method for moving a color-makeup tool of an automatic color-makeup machine according to the present invention may be implemented by a computer program product, so that after a computer (that is, the processing unit 19 of the automatic color-makeup machine), is loaded with and executes the program, the method for moving a color-makeup tool of an automatic color-makeup machine according to any embodiment of the present invention can be implemented. In some embodiments, the computer program product may be a readable recording medium, and the program is stored in the readable recording medium to be loaded into a computer. In some embodiments, the program may be a computer program product, and transmitted to the computer in a wired manner or wireless manner.

In view of the above, the method for moving a color-makeup tool of an automatic color-makeup machine according to the present invention performs color-makeup through automatic control, so as to more truly present a color-makeup effect simulated on a screen. Further, in the method for moving a color-makeup tool of an automatic color-makeup machine according to the present invention, it is accurately and safely determined according to the picture change whether the moving platform is positioned.

While the present invention has been described by the way of example and in terms of the preferred embodiments, it is to be understood that the invention need not be limited to the disclosed embodiments. On the contrary, it is intended to cover various modifications and similar arrangements included within the spirit and scope of the appended claims, the scope of which should be accorded the broadest interpretation so as to encompass all such modifications and similar structures.

**Claims**

1. A method for moving a color-makeup tool of an automatic color-makeup machine, comprising:

   driving a moving platform to carry a picture capturing module and a color-makeup tool to move relative to a part, to undergo makeup, of a user;
   during movement of the moving platform, by the picture capturing module, sequentially capturing pictures of the part to undergo makeup to obtain a plurality of pictures respectively;
   sequentially comparing an image difference between two consecutively captured pictures among the pictures;
   determining, according to a comparison result of each image difference, whether the moving platform is positioned; and
   when the moving platform is positioned, by using the color-makeup tool, performing makeup on the part to undergo makeup.

2. The method for moving a color-makeup tool of an automatic color-makeup machine according to claim 1, wherein the step of comparing the image difference between the each two pictures comprises:

   performing feature analysis on each picture to obtain a feature image, corresponding to a same feature of the part to undergo makeup, in the picture; and
   calculating a size change between the feature images of the two pictures by a processing unit.

3. The method for moving a color-makeup tool of an automatic color-makeup machine according to claim 2, wherein the determination step comprises:

   calculating, according to the size change and a movement distance of the moving platform between the two pictures are captured, a distance between the moving platform and the part to undergo makeup by the processing unit;
   comparing the distance with a threshold; and
   when the distance is smaller than or equal to the threshold, determining that the moving platform is positioned.

4. The method for moving a color-makeup tool of an automatic color-makeup machine according to any preceding claim, wherein the determination step comprises:

   calculating, according to a size change between feature images corresponding to a same feature of the part to undergo makeup and a movement distance of the moving platform between the two pictures are captured, a distance between the moving platform and the part to undergo makeup by a processing unit;
   comparing the distance with a threshold; and
   when the distance is smaller than or equal to the threshold, determining that the moving platform is positioned.

5. The method for moving a color-makeup tool of an automatic color-makeup machine according to any one of claims 2 to 4, wherein the size change is an image magnification between the feature images.

6. The method for moving a color-makeup tool of an automatic color-makeup machine according to any preceding claim, wherein the position of the part to undergo makeup is fixed:

7. The method for moving a color-makeup tool of an automatic color-makeup machine according to any preceding claim, wherein the step of comparing the image difference between the each two pictures comprises:

   performing edge analysis on the two pictures, to obtain an edge in each of the pictures; and
   calculating a change amount between the edges of the two pictures.

8. The method for moving a color-makeup tool of an automatic color-makeup machine according to claim 7, wherein the determination step comprises:

   comparing the calculated change amount with a specified change amount; and
   when the calculated change amount has the specified change amount, determining that the moving platform is positioned.

9. The method for moving a color-makeup tool of an automatic color-makeup machine according to claim 7 or claim 8, wherein the step of comparing the image difference between the each two pictures further comprises:

   before edge analysis is performed on at least one of the two pictures, adjusting, according to positions of the moving platform and camera parameters of the picture capturing module when the two pictures are obtained, a size of a picture, not undergoing the edge analysis, among the two pictures;
   wherein the edge analysis step comprises:

   performing edge analysis on a picture, not undergoing size adjustment, among the two pictures; and
   performing edge analysis on the adjusted picture.

10. The method for moving a color-makeup tool of an automatic color-makeup machine according to any one of claims 7 to 9, wherein the step of comparing the image difference between the each two pictures further comprises:

    before the change amount is calculated, adjusting a size of the image of the edge of one of the two pictures according to positions of the moving platform and camera parameters of the picture capturing module when the two pictures are obtained;
    wherein, the step of calculating the change amount comprises:

    calculating a change amount between the edge, not undergoing image size adjustment, among the edges and the adjusted edge.

11. The method for moving a color-makeup tool of an automatic color-makeup machine according to any one of claims 7 to 10, wherein the change amount is a difference between the edges regarding the number of pixels.

12. The method for moving a color-makeup tool of an automatic color-makeup machine according to any one of claims 7 to 11, wherein the change amount is a difference between the edges regarding corresponding positions.

13. The method for moving a color-makeup tool of an automatic color-makeup machine according to any one of claims 7 to 12, wherein the step of performing edge analysis on each of the pictures comprises:

    performing feature analysis on the picture to obtain an image of a front end of the color-makeup tool in the picture;
    expanding an analysis window centered around the image of the front end, wherein a size of the analysis window is smaller than a size of the picture to which the analysis window belongs; and
    performing edge analysis on a picture block, in the analysis window, of the picture to obtain the edge.

14. The method for moving a color-makeup tool of an automatic color-makeup machine according to any one of claims 7 to 13, wherein the edge comprises an image of a front end of the color-makeup tool.

15. The method for moving a color-makeup tool of an automatic color-makeup machine according to any one of claims 7 to 14, wherein the edge further comprises an image of an indentation on the part to undergo makeup.

FIG. 1

10

FIG. 2

Start

Drive the moving platform according to an X-axis coordinate value and a Y-axis coordinate value to carry the picture capturing module and the color-makeup tool to move — S30

Drive the moving platform to carry the picture capturing module and the color-makeup tool to move relative to a part, to undergo makeup, of a user — S31

By the picture capturing module, sequentially capture pictures of the part, to undergo makeup, of the user to obtain multiple pictures respectively — S33

Sequentially compare an image difference between two consecutively captured pictures — S35

Determine, according to a comparison result of the image difference, whether the moving platform is positioned on the Z-axis — S37

When the moving platform is positioned, perform makeup on the part, to undergo makeup, of the user by using the color-makeup tool — S39

End

FIG. 3

Step S30

Drive the moving platform to carry the picture capturing module and the color-makeup tool to move relative to a part to undergo makeup to a position $\quad$ S311 $\Big\}$ S31

In the current position, by the picture capturing module, capture a picture of the part to undergo makeup to obtain a picture $\quad$ S331 $\Big\}$ S33

Perform feature analysis on the picture to obtain a feature image, corresponding to a feature of the part to undergo makeup, in the picture $\quad$ S351 $\Big\}$ S35

Drive the moving member to carry the picture capturing module and the color-makeup tool to move relative to the part to undergo makeup to a next position $\quad$ S313 $\Big\}$ S31

In the current position, by the picture capturing module, capture a picture of the part to undergo makeup to obtain another picture $\quad$ S333 $\Big\}$ S33

Perform feature analysis on the another picture to obtain a feature image, corresponding to the same feature of the part to undergo makeup, in the picture $\quad$ S353

Calculate a size change of the first feature image and the second feature image $\quad$ S355 $\Big\}$ S35

Step S371

FIG. 4

Step S355

Calculate, according to the calculated size change
and a movement distance of the moving member,
a distance between the moving member and a target
when the second picture is captured

S371

Compare a threshold with the calculated distance

S373

S37

Yes

Greater than the threshold ?

S375

No

Not positioned

S377

Positioned

S379

Apply the makeup material to the
surface of the part, to undergo
makeup, of the user by the
color-makeup tool

S391

S39

S41

Does a next positioning
point exist?

Yes

No

Step S313

End

Step S311

FIG. 5

FIG. 6

FIG. 7

FIG. 8

Step S363

Compare a specified change amount with the calculated change amount — S374

Smaller than the specified change amount? — S376

Yes

No

Not positioned — S377

Positioned — S379

S37

Apply the makeup material to the surface of the part, to undergo makeup, of the user by the color-makeup tool — S391

S39

S41 — Does a next positioning point exist?

Yes

No

Step S313

End

Step S311

FIG. 9

Step S331'

Perform feature analysis on a picture to obtain an image
of the front end of the color-makeup tool in the picture $\quad$ S3571

Expand an analysis window centered around the image
of the front end of the color-makeup tool $\quad$ S3573

Perform edge analysis on the picture block in the analysis
window to obtain an edge in the picture block $\quad$ S3575

S357

Step S313

FIG. 10

Step S333'

Perform feature analysis on another picture to
obtain an image of the front end of the color-makeup
tool in the picture $\quad$ S3591

Expand an analysis window centered around the image of
the front end of the color-makeup tool $\quad$ S3593

Perform edge analysis on the picture block in the analysis
window to obtain an edge in the picture block $\quad$ S3595

S359

Step S363

FIG. 11

Step S313

Adjust the size of a picture according to the positions of the moving platform and camera parameters of the picture capturing module when the two pictures are captured ⟿ S356

Perform edge analysis on the adjusted picture to obtain a first edge ⟿ S357'

⎱ S35

Step S333'

FIG. 12

Step S333'

Adjust the size of another picture according to the positions of the moving platform and camera parameters of the picture capturing module when the two pictures are captured ⟿ S358

Perform edge analysis on the adjusted another picture to obtain a second edge ⟿ S359'

⎱ S35

Step S363

FIG. 13

```
            ┌─────────────┐
            │  Step S359  │
            └─────────────┘
                   │
                   ▼
┌──────────────────────────────────────────┐
│ Adjust the size of the first edge         │   S361
│ according to the positions of the moving  │ ⤳
│ platform and camera parameters of the     │          ⎫
│ picture capturing module when the two     │          │
│ pictures are captured                     │          │
└──────────────────────────────────────────┘          │  S35
                   │                                   │
                   ▼                                   │
┌──────────────────────────────────────────┐   S363'  │
│ Calculate a change amount between the     │ ⤳        │
│ second edge and the adjusted first edge   │          ⎭
└──────────────────────────────────────────┘
                   │
                   ▼
            ┌─────────────┐
            │  Step S371  │
            └─────────────┘
```

## FIG. 14

```
            ┌─────────────┐
            │  Step S359  │
            └─────────────┘
                   │
                   ▼
┌──────────────────────────────────────────┐   S362
│ Adjust the size of the second edge        │ ⤳
│ according to the positions of the moving  │          ⎫
│ platform and camera parameters of the     │          │
│ picture capturing module when the two     │          │
│ pictures are captured                     │          │  S35
└──────────────────────────────────────────┘          │
                   │                                   │
                   ▼                                   │
┌──────────────────────────────────────────┐   S363"  │
│ Compare the first edge with the adjusted  │ ⤳        │
│ second edge                               │          ⎭
└──────────────────────────────────────────┘
                   │
                   ▼
            ┌─────────────┐
            │  Step S371  │
            └─────────────┘
```

## FIG. 15

FIG. 16

FIG. 17

Step S359, S361 or S362

Perform feature analysis on two pictures to obtain images of a same feature in the two pictures — S3601

Make the two pictures align by using the images of the same feature — S3603

S360

Step S363, S363', or S363"

FIG. 18

FIG. 19

FIG. 20